# EUROPÄISCHE PATENTSCHRIFT

(11) **EP 0 984 619 B1**
(45) Veröffentlichungstag und Bekanntmachung des Hinweises auf die Patenterteilung: **24.11.2004**
(21) Anmeldenummer: 99116521.8
(22) Anmeldetag: 24.08.1999
(51) Int. Cl.: H04N 1/40, H04N 1/32

(54) **Verfahren und Vorrichtung zum digitalen Aufbelichten von Bildern auf lichtempfindliches Material**
Method and apparatus for digital image exposure on light sensitive material
Appareil et procédé pour l'exposition des images numérique sur matériel photosensible

(30) Priorität: 04.09.1998 DE 19840382
(43) Veröffentlichungstag der Anmeldung: 08.03.2000
(73) Patentinhaber: Agfa-Gevaert AG, 51373 Leverkusen (DE)
(72) Erfinder: Fürsich, Manfred, Dr., 82024 Taufkirchen (DE); Rauh, Hans-Jürgen, Dr., 82064 Strasslach-Hailafing (DE)

(56) Entgegenhaltungen:
- EP-A- 0 691 574
- JP-A- 10 093 774
- US-A- 5 075 782
- US-A- 5 477 353
- US-A- 5 623 585

## Beschreibung

Die Erfindung geht aus von einem Verfahren und einer Vorrichtung zum digitalen Aufbelichten von Bildern auf lichtempfindliches Material nach dem Oberbegriff von Anspruch 1 bzw. Anspruch 12.

Bei fotografischen Kopiergeräten wird üblicherweise ein entwickelter Negativfilm mit einer Lichtquelle beleuchtet und über eine Optik auf Fotopapier aufbelichtet. Auf diese Weise arbeiten herkömmliche sogenannte Minilabs und Hochleistungs-Rollenkopiergeräte, wie sie in großen Labors eingesetzt werden. Während in Minilabs die Kundenfilme einzeln kopiert werden, werden für die Verarbeitung in den Rollenkopiergeräten die einzelnen Filme zu langen Bändern zusammengeklebt, auf Spulen aufgewickelt und von der Spule kopiert.

Neuerdings sind Minilabs bekannt geworden, die nicht mehr nach dem oben beschriebenen Prinzip arbeiten, sondern die Bilder in einer digitalen Belichtungseinheit erzeugen und auf das lichtempfindliche Fotopapier übertragen. Hierzu muß jeder Film zuerst in einer Scanstation mit hoher Auflösung abgetastet und die Bilder in Datensätze umgewandelt werden.

So ein digitales Fotoprinter-System ist beispielsweise in der JP 10 093774 A in Verbindung mit der US 6 072 916 A beschrieben. Dort wird ein entwickelter fotografischer Film F in dem Scanner 14 digitalisiert und die digitalen Daten werden der Bildverarbeitung 10 zugeführt. Die einzelnen Bilder werden abwechselnd in die Speicher 36 und 38 eingelesen. Ebenfalls abwechselnd werden die Bilder den beiden Speichern wieder entnommen und der Bildbearbeitung unterzogen. Fertig bearbeitete Bilder werden dem Printer 16 zugeführt und auf Papier ausgegeben.

In dem Bildbearbeitungssystem nach der US 5 477 353 A wird der Film eines Fotografen auf herkömmliche Weise entwickelt und auf Papier ausbelichtet. Parallel wird der Film gescannt und und die erzegten digitalen Bilddaten werden in einem Speicher abgelegt. Aus den Papierbildern sucht sich der Fotograf einzelne Bilder aus, die er noch verändem möchte. Die dazugehörigen Bilddaten werden ihm nun übertragen und für die Bearbeitung zur Verfügung gestellt. Nach der Bearbeitung schickt der Fotograf die veränderten Bilddaten zurück zum Labor, wo sie auf einem Printer mit einer digitalen Belichtungseinheit auf Papier ausgegeben werden.

Als solche digitalen Belichtungseinheiten kommen beispielsweise LCD-Arrays zum Einsatz, auf denen jedes Einzelbild in den drei Farbauszügen erzeugt und dann mit Licht der entsprechenden Farbe auf das Fotopapier projiziert wird. Andere Systeme, wie beispielsweise LCD- oder PLZT-Zeilenbelichter, die das Papier zeilenweise belichten, oder aber Laserbelichter, die das Papier zeilen- und punktweise belichten, erfordern einen hochgenauen, kontinuierlichen Papiertransport, so daß Unterschiede in der Zeilenstruktur so gering bleiben, daß sie durch das menschliche Auge nicht aufgelöst werden können.

Es war die Aufgabe der Erfindung, ein Verfahren und eine Vorrichtung nach dem Oberbegriff von Anspruch 1 bzw. Anspruch 12 so auszugestalten, daß fotografische Bilder von mehreren Filmen oder Aufträgen mit großer Geschwindigkeit und ohne Unterbrechung zwischen den Aufträgen oder Filmen durch eine digitale Belichtungseinheit auf Fotopapier übertragen werden können.

Gelöst wird die Aufgabe durch ein Verfahren und eine Vorrichtung mit den kennzeichnenden Merkmalen von Anspruch 1 bzw. Anspruch 12. Dadurch, daß Bilddaten von wenigstens zwei Filmen elektronisch zwischengespeichert und verfügbar gehalten werden, können beispielsweise die Pausen überbrückt werden, die entstehen, wenn die Klebestelle zwischen einem ersten und einem zweiten Film den Scanner durchläuft. Zu diesem Zweck würde bereits die Zwischenspeicherung von den letzten Bildern des ersten Films und den ersten Bildern des zweiten Films ausreichen.

Es kommt jedoch auch häufig vor, daß Filme eine ganze Anzahl nicht kopierfähiger Aufnahmen enthalten oder sogar ganz kopierunfähig sind. Um auch in solchen Fällen ohne Stoppen des Papiertransportes kontinuierlich weiterarbeiten zu können, ist es vorteilhaft, eine größere Anzahl von Bildern - möglichst größer als die Anzahl, die auf den längsten handelsüblichen Filmen aufbelichtet ist - zwischenzuspeichern. Um einen kontinuierlichen Kopierbetrieb auch bei einer Anhäufung von Problemfilmen sicherstellen zu können, hat sich für die Zwischenspeicherung ein Richtwert von ca. 100 Bildern als günstig herausgestellt.

Wie bereits in der noch nicht veröffentlichten Anmeldung DE 198 05 048.8 beschrieben, hat es sich als vorteilhaft herausgestellt, die Filme zuerst mit einer geringen Auflösung und in einem weiteren Schritt mit hoher Auflösung zu scannen. Zwischen beiden Scanstationen ist ein Filmspeicher angeordnet, der so dimensioniert ist, daß alle Meßwerte der ersten Scanstation zur Verfügung stehen, bevor der Film die zweite Scanstation durchläuft. Die Meßwerte der ersten Scanstation werden filmweise in einem Speicher gesammelt. Aus diesen Daten werden sowohl filmspezifische als auch einzelbildspezifische Dichte- und Farbkorrekturwerte ermittelt.

Für den zweiten, hochauflösenden Scanvorgang werden diese Korrekturwerte berücksichtigt. Die so ermittelten, hochaufgelösten Bilddaten werden mit Korrekturwerten aus dem ersten Scanvorgang beaufschlagt und dann in einem größeren Speicher abgelegt und verfügbar gehalten.

Um sicherstellen zu können, daß der Bildspeicher für die korrigierten Bilddaten immer genügend Einzelbilder für einen kontinuierlichen Kopiervorgang zur Verfügung stellt, muß die Scangeschwindigkeit größer als die Kopiergeschwindigkeit sein.

Weitere Einzelheiten und Vorteile der Erfindung ergeben sich aus den Unteransprüchen im Zusammenhang mit der Beschreibung von Ausführungsbeispielen, die anhand der Zeichnung eingehend erläutert werden.

Es zeigt:
- Fig. 1: ein Ablaufdiagramm für die Bearbeitung von fotografischen Filmen in einem Großlabor und

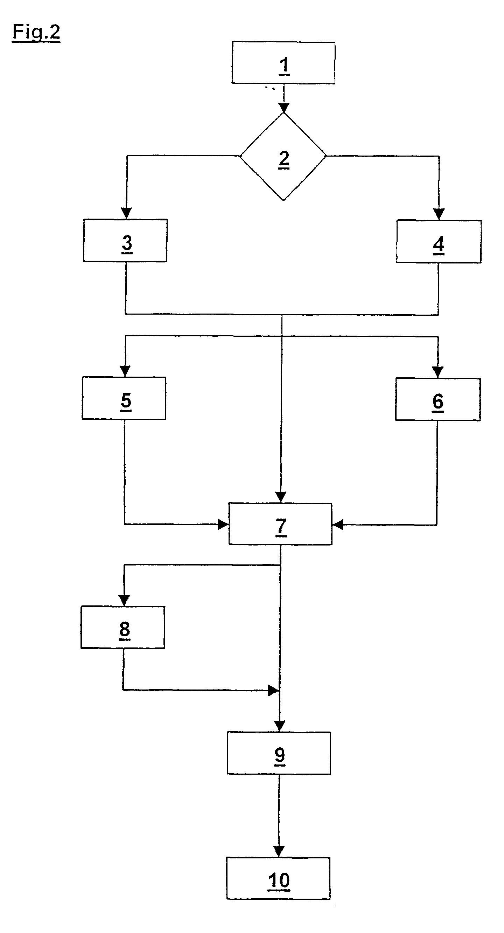

- Fig. 2: ein Ablaufdiagramm für die Bearbeitung von Aufträgen, die bereits als digitale Bildquellen vorliegen.

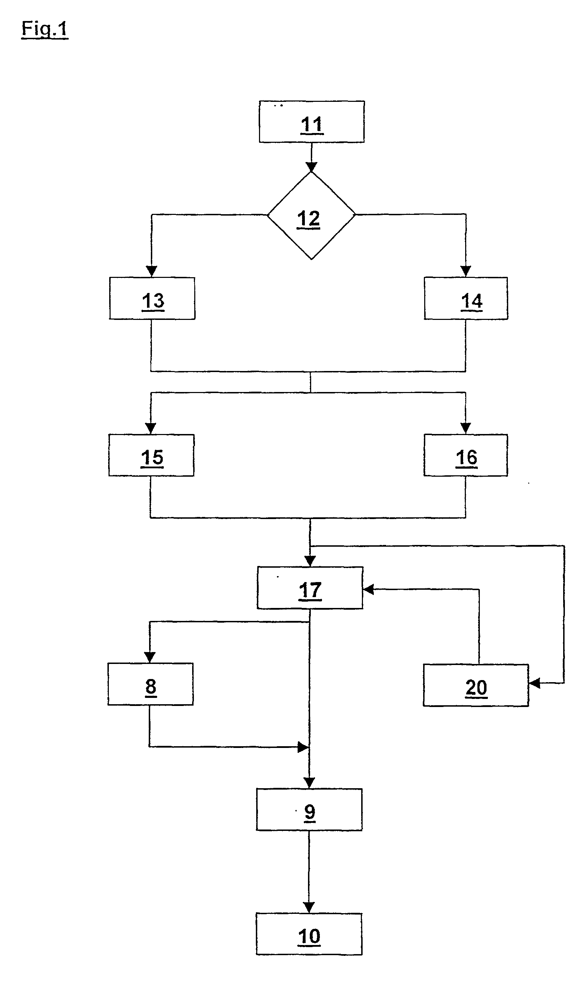

In Schritt 11 des Ablaufschemas aus Fig. 1 werden die zu langen Bändern zusammengeklebten und bereits entwickelten Filme durch einen sogenannten Pre-Scanner gefördert. Dieser Prescanner kann beispielsweise drei Sensorzeilen aufweisen. Mit diesen Sensorzeilen werden in bekannter Weise die RGB-Auszüge des Films in niedriger Auflösung ermittelt. Diese Werte werden in den Speicher 13 eingeschrieben. Wird in 12 ein Filmende, beispielsweise über den DX-Code oder über eine Klebestelle erkannt, so werden die Scanwerte des nächsten Filmes in den Speicher 14 eingeschrieben. In den Speichern 13, 14 befinden sich dadurch immer die Werte jeweils eines fotografischen Filmes.

Alternierend, wie die Scanwerte in die Speicher 13, 14 eingelesen werden, werden sie auch in umgekehrter Reihenfolge ausgelesen. Durch diese Vorgehensweise können beispielsweise billige Festplatten verwendet werden, die nicht gleichzeitig beschrieben und ausgelesen werden können.

Aus den niedrig aufgelösten Scandaten eines jeden Filmes werden in 15 Korrekturwerte ermittelt, die aus den Daten des gesamten Filmes resultieren. Mit diesen Korrekturwerten können beispielsweise spezielle filmspezifische Farbstiche eliminiert werden. In 16 werden dagegen aus den Scanwerten jedes Einzelbildes Dichte- und Farbkorrekturen für dieses Einzelbild ermittelt.

Mit dem Bezugszeichen 20 ist der zweite, hochauflösende Scanvorgang bezeichnet. Jeder Film durchläuft diese zweite Scanstation erst dann, wenn sowohl die einzelbildspezifischen als auch die filmspezifischen Korrekturwerte vorliegen. Diese Werte werden bei dem zweiten Scanvorgang verwendet, um den Dynamikbereich des Scanners optimal auszunutzen.

In Schritt 17 werden die hochaufgelösten Bilddaten aus dem zweiten Scanvorgang 20 mit den Korrekturwerten aus dem ersten Scanvorgang 11 beaufschlagt. Dieser Arbeitsschritt kann beispielsweise eine Maskierung jedes Einzelbildes beinhalten. Anschließend könnte auch noch für jedes Einzelbild eine motivspezifische Korrektur durchgeführt werden.

Die fertig bearbeiteten Bilddaten werden dann einerseits in den Zwischenspeicher 9 eingeschrieben und andererseits dem Index-Composer 8 zugeführt. Hier werden alle Bilddaten eines Filmes gesammelt, bearbeitet und mit alphanumerischen Zeichen zu einem Indexprint zusammengestellt. Auch die Bilddaten dieses Indexprints werden nach dem letzten Bild eines jeden Filmes in den Zwischenspeicher 9 eingeschrieben. Dieser Zwischenspeicher ist vorteilhaft aus schnellen Speicherchips aufgebaut und wird als FIFO (first-in-first-out) betrieben. Seine Kapazität ist auf etwa 100 Einzelbilder ausgelegt. Alternativ könnte er auch - wie die Speicher 13 und 14 - aus zwei Festplatten aufgebaut sein und abwechselnd beschrieben und gelesen werden. In Schritt 10 werden die Bilder aus dem Speicher 9 abgerufen und mit einer digitalen Belichtungseinheit auf Fotopapier übertragen.

Selbstverständlich kann statt der Festplattenspeicher 13, 14 auch ein FIFO verwendet werden.

Erfindungsgemäß können jedoch nicht nur fotografische Filme verarbeitet werden, sondern auch Daten aus digitalen Bildquellen, die auf beliebigen Medien abgespeichert sind und beispielsweise von digitalen Kameras stammen. Es kommen hier auch Aufträge in Frage, die von durch Fotografen selbst gescannten Filmen stammen und dem Labor z. B. über Internet zugestellt wurden. Solche Aufträge werden in Schritt 1 eingelesen. In 2 wird wiederum, äquivalent zu Schritt 12 in Fig. 1, das Ende eines Auftrags bestimmt und entsprechend in die Speicher 3 und 4 eingelesen. Im Unterschied zu den Speichern 13 und 14 beinhalten diese Speicher jedoch bereits die Bilddaten jedes Auftrages in hoher Auflösung. In 5 und 6 werden entsprechend zu den Schritten 15, 16 in Fig. 1 Korrekturwerte errechnet. Hierzu können entweder die hochaufgelösten Bilddaten aus Speicher 3, 4 verwendet werden oder aber es werden jeweils mehrere Bildpunkte zusammengefaßt, um den Rechenaufwand zu minimieren. In Schritt 7 werden die hochaufgelösten Bilddaten, die bei diesem Ausführungsbeispiel nicht von einem Scanner, sondern direkt aus den Bildspeichern 3 und 4 kommen, mit den Korrekturwerten aus 5 und 6 beaufschlagt. Die restlichen Verfahrensschritte bis zum Aufbelichten der Bilder auf Fotopapier, entsprechen den in Fig. 1 beschriebenen und sind daher auch mit den gleichen Bezugszeichen versehen.

Der Ausdruck Auftrag" steht für mehrere Bilder, die einen gleichen Bezug haben. Dies können beispielsweise Bilder eines Films sein oder aber Bilder, die aus einer digitalen Kamera ausgelesen wurden.

## Patentansprüche

1. Verfahren zum digitalen Aufbelichten von fotografischen Bildern auf Fotopapier, bei dem das Fotopapier durch eine Belichtungsstation bewegt wird, wobei mehrere Bilder einem Auftrag zugeordnet sind, **dadurch gekennzeichnet, daß** Bilddaten von wenigstens zwei Aufträgen gleichzeitig elektronisch zwischengespeichert und verfügbar gehalten werden sodaß mehrere Aufträge nacheinander ohne Unterbrechung verarbeitet werden können, wobei ein Auftrag aus mehreren Bildern eines Films oder den auf einem Medium gespeicherten Bilddaten mehrerer Bilder von einer digitalen Kamera besteht.

2. Verfahren nach Anspruch 1, **dadurch gekennzeichnet, daß** das Fotopapier kontinuierlich durch die Belichtungsstation bewegt wird.

3. Verfahren nach Anspruch 1, **dadurch gekennzeichnet, daß** alle Bilddaten von wenigstens zwei Aufträgen zwischengespeichert werden.

4. Verfahren nach Anspruch 1, **dadurch gekennzeichnet, daß** die Aufträge von digitalen Bildquellen eingelesen werden.

5. Verfahren nach Anspruch 1, **dadurch gekennzeichnet, daß** die Aufträge aus Bilddaten zusammengestellt werden, die jeweils aus den Scanwerten eines fotografischen Films ermittelt werden.

6. Verfahren nach Anspruch 5, **dadurch gekennzeichnet, daß** die Filme in einer ersten Scanstation mit geringer Auflösung und in einer zweiten Scanstation mit höherer Auflösung abgetastet werden.

7. Verfahren nach Anspruch 6, **dadurch gekennzeichnet, daß** die Filme zwischen der ersten und der zweiten Scanstation einen Filmspeicher durchlaufen, der wenigstens einen Film aufnimmt.

8. Verfahren nach Anspruch 7, **dadurch gekennzeichnet, daß** die Scanwerte der ersten Scanstation filmweise in einem Speicher gesammelt werden.

9. Verfahren nach Anspruch 8, **dadurch gekennzeichnet, daß** aus den ersten Scanwerten eines Filmes Dichte- und Farbkorrekturwerte für die Einzeibilder des Filmes ermittelt werden.

10. Verfahren nach Anspruch 9, **dadurch gekennzeichnet, daß** die in der zweiten Scanstation ermittelten Bilddaten mit den Korrekturwerten verrechnet werden.

11. Verfahren nach Anspruch 10, **dadurch gekennzeichnet, daß** die korrigierten Bilddaten zwischengespeichert und verfügbar gehalten werden.

12. Vorrichtung zum digitalen Aufbelichten von Bildern fotografischer Filme auf Fotopapier, mit einer Scanstation, in der die Dichtewerte der Bilder ermittelt werden und mit einer Belichtungsstation, durch die das Fotopapier bewegt wird, **dadurch gekennzeichnet, daß** mindestens eine Speichereinrichtung vorgesehen ist, in der die ermittelten Dichtewerte der Bilder oder daraus abgeleitete Bilddaten von wenigstens zwei Filmen gleichzeitig gespeichert werden sodaß mehrere Filme nacheinander ohne Unterbrechung verarbeitet werden können.

13. Vorrichtung nach Anspruch 12, **dadurch gekennzeichnet, daß** in den Speichereinrichtungen Bilddaten von dichte- und farbkorrigierten Bildern speicherbar sind.

14. Vorrichtung nach Anspruch 12, **dadurch gekennzeichnet, daß** die Scanstation eine Prescan-Einheit und eine Mainscan-Einheit aufweist.

15. Vorrichtung nach Anspruch 14, **dadurch gekennzeichnet, daß** zwischen Prescan-Einheit und Mainscan-Einheit ein Filmspeicher angeordnet ist, der so dimensioniert ist, daß alle Meßwerte der Prescan-Einheit zur Verfügung stehen, bevor der Film die Mainscan-Einheit durchläuft.

## Claims

1. A process for digital exposure of photographic images onto photographic paper, in which the photographic paper is moved through an exposure station, wherein two or more images are assigned to an order, **characterised in that** image data from at least two orders are simultaneously held in intermediate electronic storage and kept available such that two or more orders may be processed in succession without interruption, wherein an order consists of two or more images from a film or the image data of two or more images from a digital camera stored on a storage medium.

2. A process according to claim 1, **characterised in that** the photographic paper is moved continuously through the exposure station.

3. A process according to claim 1, **characterised in that** all the image data from at least two orders are held in intermediate storage.

4. A process according to claim 1, **characterised in that** the orders are input from digital image sources.

5. A process according to claim 1, **characterised in that** the orders are compiled from image data which are in each case determined from the scan values from a photographic film.

6. A process according to claim 5, **characterised in that** the films are scanned at low resolution in a first scanning station and at higher resolution in a second scanning station.

7. A process according to claim 6, **characterised in that**, between the first and the second scanning stations, the films pass through film storage means which accommodate at least one film.

8. A process according to claim 7, **characterised in that** the scan values from the first scanning station are collected film-by-film in storage means.

9. A process according to claim 8, **characterised in that** density correction and colour correction values for the individual images of the film are determined from the first scan values.

10. A process according to claim 9, **characterised in that** the image data determined in the second scanning station are adjusted with the correction values.

11. A process according to claim 10, **characterised in that** the corrected image data are held in intermediate storage and kept available.

12. An apparatus for digital exposure of photographic film images onto photographic paper, with a scanning station, in which the density values of the images are determined, and an exposure station, through which the photographic paper is moved, **characterised in that** at least one storage device is provided, in which the determined density values of the images or image data derived therefrom from at least two films are simultaneously stored such that two or more films may be processed in succession without interruption.

13. An apparatus according to claim 12, **characterised in that** image data of density- and colour-corrected images may be stored in the storage devices.

14. An apparatus according to claim 12, **characterised in that** the scanning station comprises a prescan unit and a main scan unit.

15. An apparatus according to claim 14, **characterised in that** film storage is arranged between the prescan unit and main scan unit, which storage is dimensioned such that all the measurement values from the prescan unit are available before the film passes through the main scan unit.

## Revendications

1. Procédé destiné à la projection numérique d'images photographiques sur du papier photographique, dans lequel le papier photographique passe à travers un poste d'exposition, plusieurs images étant associées à une commande, **caractérisé en ce que** des données d'image d'au moins deux commandes font l'objet d'une mémorisation électronique temporaire simultanée et sont maintenues à disposition, de sorte que plusieurs commandes puissent être traitées successivement sans interruption, une commande étant constituée de plusieurs images d'un film ou des données d'image de plusieurs images d'une caméra numérique mémorisées sur un support.

2. Procédé selon la revendication 1, **caractérisé en ce que** le papier photographique passe en continu à travers le poste d'exposition.

3. Procédé selon la revendication 1, **caractérisé en ce que** toutes les données d'image d'au moins deux commandes font l'objet d'une mémorisation temporaire.

4. Procédé selon la revendication 1, **caractérisé en ce que** les commandes sont lues à partir de sources d'images numériques.

5. Procédé selon la revendication 1, **caractérisé en ce que** les commandes sont constituées de données d'image qui sont respectivement déterminées à partir des valeurs de balayage d'un film photographique.

6. Procédé selon la revendication 5, **caractérisé en ce que** les films sont scannés dans un premier poste de balayage à faible résolution, et dans un deuxième poste de balayage à haute résolution.

7. Procédé selon la revendication 6, **caractérisé en ce que**, entre le premier et le deuxième poste de balayage, les films traversent une mémoire de film qui enregistre au moins un film.

8. Procédé selon la revendication 7, **caractérisé en ce que** les valeurs de balayage du premier poste de balayage sont enregistrées par film dans une mémoire.

9. Procédé selon la revendication 8, **caractérisé en ce que**, à partir des premières valeurs de balayage d'un film, des valeurs de correction de densité et de couleur sont déterminées pour les images individuelles du film.

10. Procédé selon la revendication 9, **caractérisé en ce que** les données d'image déterminées dans le deuxième poste de balayage sont corrigées avec les valeurs de correction.

11. Procédé selon la revendication 10, **caractérisé en ce que** les données d'image corrigées sont mémorisées temporairement, et tenues à disposition.

12. Dispositif destiné à la projection numérique d'images de films photographiques sur du papier photographique, comportant un poste de balayage dans lequel sont déterminées les valeurs de densité des images, et un poste d'exposition à travers lequel passe le papier photographique, **caractérisé en ce qu'**il est prévu au moins un dispositif de mémorisation, dans lequel les valeurs de densité déterminées des images, ou des données d'image dérivées de celles-ci, d'au moins deux films sont mémorisées simultanément, de sorte que plusieurs films puissent être traités successivement sans interruption.

13. Dispositif selon la revendication 12, **caractérisé en ce que** des données d'image d'images corrigées du point de vue densité et couleur peuvent être mémorisées dans les dispositifs de mémorisation.

14. Dispositif selon la revendication 12, **caractérisé en ce que** le poste de balayage comporte une unité de pré-balayage et une unité de balayage principal.

15. Dispositif selon la revendication 14, **caractérisé en ce qu'**une mémoire de film est disposée entre l'unité de pré-balayage et l'unité de balayage principal, laquelle est dimensionnée de telle sorte que toutes les valeurs de mesure de l'unité de pré-balayage soient disponibles avant que le film traverse l'unité de balayage principal.
